# EUROPEAN PATENT APPLICATION

(11) **EP 4 641 045 A1**
(43) Date of publication of application: **29.10.2025**
(21) Application number: 24171785.9
(22) Date of filing: 23.04.2024
(51) Int. Cl.: F16F 1/368

(54) **HYBRID LEAF SPRING WITH VARIABLE STIFFNESS FOR VEHICLES**

(30) Priority: 22.04.2024 IT 202400009172
(71) Applicant: MB ReD S.r.l., 10078 Venaria Reale (TO) (IT)
(72) Inventor: Papaspyrou, Spyridon, 10078 Venaria Reale (IT)
(74) Representative: Garavelli, Paolo

(57) **Abstract**

A hybrid leaf spring (10) with variable stiffness for vehicles is described, comprising a first leaf (1) made of metallic material, fixed to a second leaf (2) made of composite material, said second leaf (2) made of composite material comprising piezoelectric materials or shape memory alloys (SMA) inserted into the composite structure to actively control the mechanical response of the hybrid leaf spring (10) by adjusting its stiffness or shape.

## Description

The present invention refers to a hybrid leaf spring with variable stiffness for vehicles, in particular a leaf spring that can be used in an intelligent system capable of collecting data relating to the behaviour of the spring during the working life of the vehicle.

More specifically, the invention refers to semi-elliptical and parabolic leaf springs and leaf spring brackets for industrial vehicles.

Known suspensions separate the suspended masses (body, interior, engine) of the vehicle from the un-sprung ones (the tyres) and include two elements, an elastic one, the spring, for example of the leaf spring type, which connects the chassis to the wheels and has the task of transforming the stresses coming from the ground into kinetic energy by loading the spring, and a dampener, the shock absorber which absorbs the kinetic energy loaded into the elastic components, limiting their oscillation time.

The suspension guarantees stability to the vehicle and comfort and safety for those in the passenger compartment.

Leaf springs are important components of the suspension system of industrial vehicles, such as trucks, and are subjected to multi-axial loads with variable amplitude.

Known leaf spring - shock absorber systems have the problem of not having optimal performance when load conditions, types of terrain and driving scenarios vary, with a worsening of both vehicle stability and driving comfort.

Another problem is caused by the high mass which affects the vehicle's fuel consumption; Furthermore, the weight distribution in heavy vehicles can undergo significant changes due to modifications made by vehicle bodybuilders which cause an altered weight distribution which can compromise the stability of the vehicle and the safety of the driver.

Object of the present invention is providing a hybrid leaf spring with variable stiffness that allows its stiffness to be dynamically modified, allowing optimal performance to be achieved in different load conditions, types of terrain and driving scenarios, improving both the stability of the vehicle and driving comfort.

Another object of the present invention is providing a variable stiffness hybrid leaf spring which, in addition to allowing for weight reduction, integrates intelligent features for real-time monitoring and adjustment.

Leveraging innovative materials, advanced manufacturing techniques and data analysis, the hybrid leaf spring of the invention helps improving vehicle sustainability and performance while increasing passenger safety.

Other objects of the invention are providing a hybrid leaf spring with variable stiffness that has high structural integrity and includes a system of sensors that allow monitoring of various parameters such as load distribution, stress levels and accumulation of fatigue, enabling proactive maintenance, early fault detection and improved safety measures.

The above and other objects and advantages of the invention, as will appear from the following description, are achieved with a hybrid leaf spring with variable stiffness such as claimed in the independent claim. Preferred embodiments and non-trivial variants of the present invention form the subject matter of the dependent claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the attached claims.

The present invention will be better described by a preferred embodiment, provided by way of example and not by way of limitation, with reference to the attached drawings, in which:

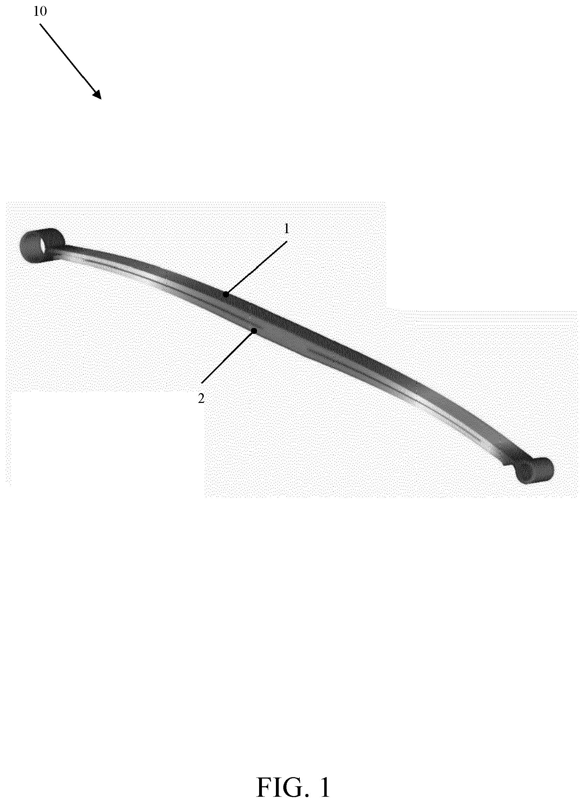

- Figure 1 shows a hybrid leaf spring with variable stiffness according to the invention.

Referring to the Figure, the hybrid leaf spring 10 with variable stiffness for vehicles according to the present invention comprises a first leaf or main leaf 1 made of metallic material, preferably steel (for example 51CrV4 steel), fixed to a second leaf 2 made of composite material, for example by means of adhesive placed between the surfaces of the two leaves.

The second leaf 2 made of composite material of the hybrid leaf spring 10 with variable stiffness according to the invention comprises piezoelectric materials or shape memory alloys (SMA) inserted into the composite structure so as to actively control the mechanical response of the hybrid leaf spring 10 with variable stiffness.

In a first embodiment of the hybrid leaf spring 10 with variable stiffness according to the invention, the second leaf 2 is made of a multilayer composite material comprising layers of piezoelectric materials inserted between layers of glass fibre (GF) sheets and/or or carbon fibre (CF) sheets.

The piezoelectric materials inserted within the variable stiffness hybrid leaf spring 10, due to their ability to convert mechanical stress or strain into an electrical signal, allow monitoring and measuring the applied load, strain and other relevant parameters in real time.

In addition to sensing, piezoelectric materials allow actively influencing the stiffness of the composite structure. By applying an electric field, the layers of piezoelectric material induce a controlled deformation that can be used to adjust the stiffness or shape of the hybrid leaf spring 10 with variable stiffness of the invention. The reverse piezoelectric effect also allows the stiffness of the composite material, and therefore of the hybrid leaf spring 10 with variable stiffness, to be modified in response to an electric current applied to the piezoelectric material inserted between the layers of composite material of the second leaf 2.

In a second embodiment of the hybrid leaf spring 10 with variable stiffness according to the invention, the second leaf 2 is made of a multilayer composite material comprising wires of shape memory alloy (SMA) materials inserted between layers of leaves of glass fibres (GF) and/or carbon fibre sheets (CF).

Shape memory materials, such as nickel-titanium alloys, embedded within the hybrid leaf spring 10 with variable stiffness, possess the ability to modify their crystalline structure and recover their original shape when subjected to specific conditions. The wires of shape memory materials (SMA) embedded within the second leaf 2 made of multilayer composite material allow the stiffness of the hybrid leaf spring 10 to be modified.

Through a temperature control system, using the Joule effect or other heating mechanisms, wires of shape memory materials (SMA) are selectively activated to induce changes in the stiffness of the hybrid leaf spring 10.

By controlling the temperature, configurations of the hybrid leaf spring 10 of intermediate stiffnesses can be obtained, ranging from the initial undeformed state to the fully recovered shape of the shape memory material (SMA).

Furthermore, the stacking sequence of the composite layers influences the stiffness response of the hybrid leaf spring 10 under load. By optimizing the stacking sequence and inserting rubber pads between the leaves 1, 2 (rubber lift pads), the resistance to deformation caused by the applied load is improved, thus improving the overall stiffness and strength properties of the hybrid leaf spring 10 of the invention.

In a preferred embodiment of the hybrid leaf spring 10 with variable stiffness for vehicles according to the invention, the second leaf 2 is made of a multilayer composite material comprising an alternation of layers of glass fibre (GF) sheets with carbon fibre (CF) sheets, in a 1 to 1 layer ratio, i.e. 50% layers made with glass fibre (GF) sheets and 50% layers made with carbon fibre (CF) sheets.

Preferably, the second leaf 2 made of composite material is fixed to the first metal leaf 1 by means of a co-curing technique, in which the resin of the composite material not yet polymerized itself acts as an adhesive. With this technique, the polymerisation of the composite and the joint occurs simultaneously (co-cured).

Preferably, the joining surfaces between the first leaf 1 made of metallic material and the second leaf 2 made of composite material are machined in such a way as to increase their roughness to optimize the fixing between the leaves; in particular, the interface surface between the two leaves of the second leaf 2 in composite material is equipped with tips of different geometry, which, penetrating into corresponding cavities obtained on the interface surface of the first leaf 1 in metallic material, improve adhesion between the surfaces of the two different materials fixed by co-curing.

Preferably, the second leaf 2 made of composite material has a parabolic profile so as to obtain a variable thickness along its entire length in a decreasing manner starting from its centre to its ends.

For example, the thickness of the second leaf 2 at its centre is 16 mm and 13 mm at the ends.

In a preferred embodiment of the invention, the hybrid leaf spring 10 with variable stiffness for vehicles comprises at least one sensor, preferably a plurality of sensors, fixed to the second leaf 2 made of composite material or inserted inside it to monitor the behaviour of the leaf spring 10 during loading and unloading of the vehicle on which it is mounted.

The sensor allows you to measure the weight of the vehicle, measuring the linear effort and/or bending stresses in real time, preventing overloading of the vehicle and consequent breakage of the leaf spring.

Preferably, the sensor is positioned inside the composite material matrix during the moulding process of the leaf spring 10, or is welded onto the surface of the second leaf 2 during a second firing of the composite material.

The sensor must be able to withstand high temperatures (around 110 °C) and vacuum conditions to which it is subjected during the moulding of the second leaf 2 in composite material and is preferably positioned near areas of the leaf spring 10 which during the operation are subjected to high pressure loads.

Preferably, the sensor is attached to the second leaf 2 of the hybrid leaf spring 10 with variable stiffness of the invention in one of the following ways:
- the sensor is inserted between two layers of pre-impregnated glass fibre,
- the sensor is immersed in epoxy resin which is polymerized either at room temperature or at 70°C for 3 hours, with or without application of vacuum,
- the sensor is fixed on the second leaf 2 of the hybrid leaf spring 10 made of composite material using a layer of pre-impregnated glass fibre, all of which is left to polymerise, for example for 50 minutes, at a temperature of 110°C.

The sensors vary the resistance value based on the applied force: under rest conditions the resistance has a value tending towards infinity (∞) while by applying pressure the value lowers to a few tens of Ohm (Ω).

The sensor changes its resistive value slightly when flexed.

The positioning of the sensor within the hybrid leaf spring 10 with variable stiffness is derived through an experimental study based on machine learning analysis, and is critical to ensuring accurate and reliable measurements. Factors such as deformation, vibration and temperature can be monitored using appropriate sensor technologies. The orientation of the sensor inside the second leaf 2 in composite material is also fundamental to acquire the desired data and guarantee the alignment of the leaf spring with the expected load conditions.

To ensure accurate measurements, the sensor output value must be calibrated specifically for the hybrid leaf spring and its intended load. Calibration procedures are established to correlate the sensor data with the actual mechanical behaviour of the hybrid leaf spring. This validation process ensures the reliability of the embedded sensor and its ability to provide meaningful data for analysis.

Preferably, real-time data from the sensor is collected and analysed by a monitoring system that allows continuous monitoring of the performance of the hybrid leaf spring with variable stiffness under operating conditions. By analysing the data collected by the sensors, any deviations from expected behaviour that highlight potential problems are identified, allowing to make informed decisions regarding maintenance and performance optimization.

By integrating sensors directly into hybrid leaf springs and establishing a robust monitoring system, real-time data can be leveraged to improve performance, durability and reliability of the suspension system.

The use of piezoelectric materials or shape memory alloys (SMA) in the composite structure of the hybrid leaf spring 10 with variable stiffness according to the invention allows the stiffness of the hybrid leaf spring to be actively adjusted in response to changing load conditions or to other external factors, allowing for greater adaptability, better vehicle dynamics and greater safety for a wide range of applications.

Advantageously, the co-cured junction between the first leaf made of metallic material and the second leaf made of composite material of the hybrid leaf spring with variable stiffness according to the invention allows obtaining a strong and reliable bond between the two leaves; factors such as joint design, surface preparation, adhesive selection and curing processes help identifying the optimal combination of manufacturing parameters to achieve a strong and reliable bond between the metallic material and the composites.

An advantage of integrated sensors is to provide information on the mechanical behaviour of hybrid leaf springs, also allowing them to be optimized for design, identification of potential failure modes and ensure safe and efficient operation.

The hybrid leaf springs with variable stiffness of the invention have the advantages of having low weight, high structural integrity improving vehicle sustainability and performance, and passenger safety.

## Claims

1. Hybrid leaf spring (10) with variable stiffness for vehicles comprising a first leaf (1) made of metallic material, fixed to a second leaf (2) made of composite material, said second leaf (2) made of composite material comprising piezoelectric materials or shape memory alloys (SMA) inserted into the composite structure so as to actively control the mechanical response of the hybrid leaf spring (10) by adjusting its stiffness or shape.

2. Hybrid leaf spring (10) with variable stiffness for vehicles according to claim 1, **characterized in that** the second leaf (2) is made of a multilayer composite material comprising layers of piezoelectric materials inserted between layers of glass fibre (GF) sheets and/or carbon fibre (CF) sheets.

3. Hybrid leaf spring (10) with variable stiffness for vehicles according to claim 1, **characterized in that** the second leaf (2) is made of a multilayer composite material comprising wires of shape memory materials (SMA) inserted between layers of glass fibre (GF) sheets and/or carbon fibre (CF) sheets.

4. Hybrid leaf spring (10) with variable stiffness for vehicles according to claim 3, **characterized in that** the shape memory material is a nickel-titanium alloy.

5. Hybrid leaf spring (10) with variable stiffness for vehicles according to any of the previous claims, **characterized in that** the second leaf (2) made of composite material is fixed to the first leaf (1) made of metallic material by means of a co-curing technique, in which the resin of the composite material not yet polymerized acts as an adhesive.

6. Hybrid leaf spring (10) with variable stiffness for vehicles according to claim 5, **characterized in that** the interface surface between the two sheets of the second leaf (2) in composite material is equipped with tips of different geometry, which, penetrating into corresponding cavities obtained on the interface surface of the first leaf (1) in metallic material, improve the adhesion between the surfaces of the two different materials fixed by co-curing.

7. Hybrid leaf spring (10) with variable stiffness for vehicles according to any of the previous claims, **characterized in that** the second leaf (2) made of composite material has a parabolic shaped profile so as to obtain a variable thickness along its entire length in a decreasing manner starting from its centre to its ends.

8. Hybrid leaf spring (10) with variable stiffness for vehicles according to any of the previous claims, **characterized in that** it includes at least one sensor fixed to the second leaf (2) made of composite material or inserted inside it.

9. Hybrid leaf spring (10) with variable stiffness for vehicles according to claim 8, **characterized in that** the sensor is positioned inside the composite material matrix during the moulding process of the leaf spring (10), or is welded onto the surface of the second leaf (2) during a second firing of the composite material.

10. Hybrid leaf spring (10) with variable stiffness for vehicles according to claim 8 or 9, **characterized in that** the sensor is fixed on the second leaf (2) using a layer of pre-impregnated glass fibre.
